Europäisches Patentamt

European Patent Office

Office européen des brevets

(19)

(11) Numéro de publication: **0 102 855**
**A2**

## (12) DEMANDE DE BREVET EUROPEEN

(21) Numéro de dépôt: **83401075.3**

(22) Date de dépôt: **27.05.83**

(51) Int. Cl.³: **F 16 H 19/00**

(30) Priorité: **04.06.82 FR 8209734**

(43) Date de publication de la demande:
**14.03.84 Bulletin 84/11**

(84) Etats contractants désignés:
**CH DE GB IT LI NL SE**

(71) Demandeur: **THOMSON-CSF**
**173, Boulevard Haussmann**
**F-75379 Paris Cedex 08(FR)**

(72) Inventeur: **Graffin, Jean-Claude**
**THOMSON-CSF SCPI 173, bld Haussmann**
**F-75379 Paris Cedex 08(FR)**

(74) Mandataire: **Wang, Pierre et al,**
**THOMSON-CSF SCPI 173, Bld Haussmann**
**F-75379 Paris Cedex 08(FR)**

(54) **Dispositif de transformation d'un mouvement circulaire en mouvement linéaire, et support mobile mettant en oeuvre ce dispositif.**

(57) Le dispositif comporte un arbre cylindrique lisse (52) et un corps mobile (57) placé sur cet arbre. La rotation de l'arbre (52) entraîne le déplacement longitudinal du corps (57). Des billes (50,51) placées dans le corps (57) sont guidées pour décrire sur l'arbre (52) une hélice (26). Deux rouleaux (56,60) et un poussoir à bille (65) solidaires du corps (57) guident et maintiennent chaque bille (50) sur l'arbre (52). Deux ensembles, comportant chacun trois billes disposées à 120° autour de l'arbre (52), sont situés dans deux plans distincts parallèles entre eux et perpendiculaires à l'axe de l'arbre (52).

Applications à la micro-lithographie.

./...

FIG.8

# DISPOSITIF DE TRANSFORMATION D'UN MOUVEMENT CIRCULAIRE EN MOUVEMENT LINEAIRE ET SUPPORT MOBILE METTANT EN OEUVRE CE DISPOSITIF.

La présente invention concerne un dispositif permettant la transformation d'un mouvement circulaire en mouvement linéaire. L'invention concerne plus particulièrement des dispositifs utilisés dans les machines de précision dans lesquelles des moteurs rotatifs, généralement solidaires du bâti de la machine, sont utilisés pour communiquer des mouvements de translation à des parties mobiles. De telles machines sont utilisées, par exemple, dans la fabrication des circuits intégrés, où en raison de la haute densité d'intégration des platines porte-substrat doivent être positionnées par rapport à des sources d'énergie radiante en des temps très courts et avec des précisions de l'ordre du dixième de micromètre.

Le système vis-écrou est un moyen connu pour transformer un mouvement circulaire en mouvement linéaire ; ce système, quelle que soit la forme du filetage retenue (triangulaire, rectangulaire, trapézoïdale etc) présente du jeu, des frottements, de l'usure, un mauvais rendement énergétique dans la transmission du mouvement ; par ailleurs si le jeu est réduit par un usinage précis, la vitesse de fonctionnement se trouve considérablement réduite, les conditions de grippage étant atteintes très rapidement.

Un autre moyen connu consiste à placer des billes entre l'écrou et la vis et à remplacer ainsi le contact vis-écrou du type frottement par un contact du type roulement ; le rendement énergétique est amélioré mais le jeu reste trop important.

Un troisième moyen connu, décrit dans ce qui suit, consiste à précontraindre les billes de façon à éliminer le jeu ; le couple d'entraînement est momentanément modifié à l'instant où chacune des billes transite entre la gorge hélicoïdale et le circuit dit "de recyclage"; ces dispositifs à billes précontraintes présentent, de ce fait, un couple d'entraînement irrégulier.

Ces dispositifs de transformation de mouvement circulaire en mouvement linéaire sont généralement associés à des circuits électroniques de commande ; lorsque ces dispositifs ont un couple d'entraînement irrégulier ou lorsqu'ils présentent du jeu, en particulier du jeu de renversement, le système provoque, en fin de déplacement, une suite de dépassements de part et d'autre du point d'arrêt connue sous le nom de phénomène de pompage, phénomène fortement préjudiciable aux performances du système.

Le dispositif selon l'invention permet de pallier l'ensemble de ces inconvénients ; les éléments constitutifs sont simples, de précision standard et pour la plupart disponibles sur le marché ; le dispositif permet en outre de choisir un pas extrêmement faible sans dégrader les performances ou élever le coût.

L'invention a donc pour objet un dispositif de transformation d'un mouvement circulaire en un mouvement linéaire comprenant un arbre cylindrique lisse solidaire d'un bâti et pouvant être animé d'un mouvement de rotation autour de son axe de révolution, un corps mobile devant se déplacer selon un mouvement linéaire parallèle à l'axe de l'arbre cylindrique, des organes de liaison disposés entre l'arbre cylindrique et le corps mobile caractérisé en ce que les organes de liaison comprennent des premiers moyens de liaison en contact avec l'arbre constitués d'au moins une première et seconde billes, des seconds moyens de liaison solidaires du corps mobile et placé en contact avec les premiers moyens de liaison constitués de rouleaux, des troisièmes moyens de liaison solidaires du corps mobile et placé en contact avec les premiers moyens de liaison constitués de poussoirs ; et en ce que chacune des billes ayant son centre confondu avec le centre d'un système de coordonnées rectangulaires dextrorsum défini par les axes XX', YY', ZZ' interceptant respectivement la surface de la bille aux points x,x',y,y',z,z', les moyens de liaison vérifient simultanément les conditions suivantes : l'axe de rotation des billes est confondu avec l'axe de référence YY' et cet axe est situé dans un plan parallèle à l'axe de l'arbre cylindrique, l'axe de rotation des billes et l'axe de révolution de l'arbre cylindrique font entre eux un angle déterminé α, le point de contact entre chaque bille et l'arbre est situé en x', ladite première bille est en contact avec un premier rouleau en un point situé à l'intérieur du triangle sphérique x y z, avec un second rouleau en un point à l'intérieur du triangle xyz' et avec un premier poussoir à l'intérieur du fuseau z x z' y' z ; ladite seconde bille est en contact avec un troisième rouleau en un point situé à l'intérieur du triangle sphérique xy'z, avec un quatrième rouleau en un point situé à l'intérieur du triangle xy'z' et avec un second poussoir à l'intérieur du fuseau z x z'y z l'axe de révolution de chaque rouleau est à la fois perpendiculaire au rayon de la bille passant par le point de contact entre ledit rouleau et ladite bille et situé dans un plan contenant l'axe de rotation YY'.

L'invention sera mieux comprise et d'autres avantages apparaîtront à l'aide de la description qui suit, en référence aux figures annexées.

- Les figures 1 et 2 illustrent un exemple de vis à billes selon l'art connu.

- La figure 3 illustre un exemple de dispositif à billes précontraintes selon l'art antérieur.

- Les figures 4, 5 et 6 représentent une forme très simplifiée du dispositif selon l'invention illustrant un premier aspect du fonctionnement.

- La figure 7 rapporte une bille à un système de coordonnées et définit des repères nécessaires à la suite de la description.

- La figure 8 illustre la disposition des éléments dans une vue partielle d'un dispositif selon l'invention.

- La figure 9 représente une forme simplifiée du dispositif selon l'invention illustrant un second aspect du fonctionnement.

- La figure 10 représente une vue en coupe du dispositif selon l'invention illustré par la figure 8.

- La figure 11 représente une vue en perspective d'un exemple de réalisation selon l'invention.

- La figure 12 illustre un appareil comportant un support mobile dans un plan mettant en oeuvre deux dispositifs selon l'invention.

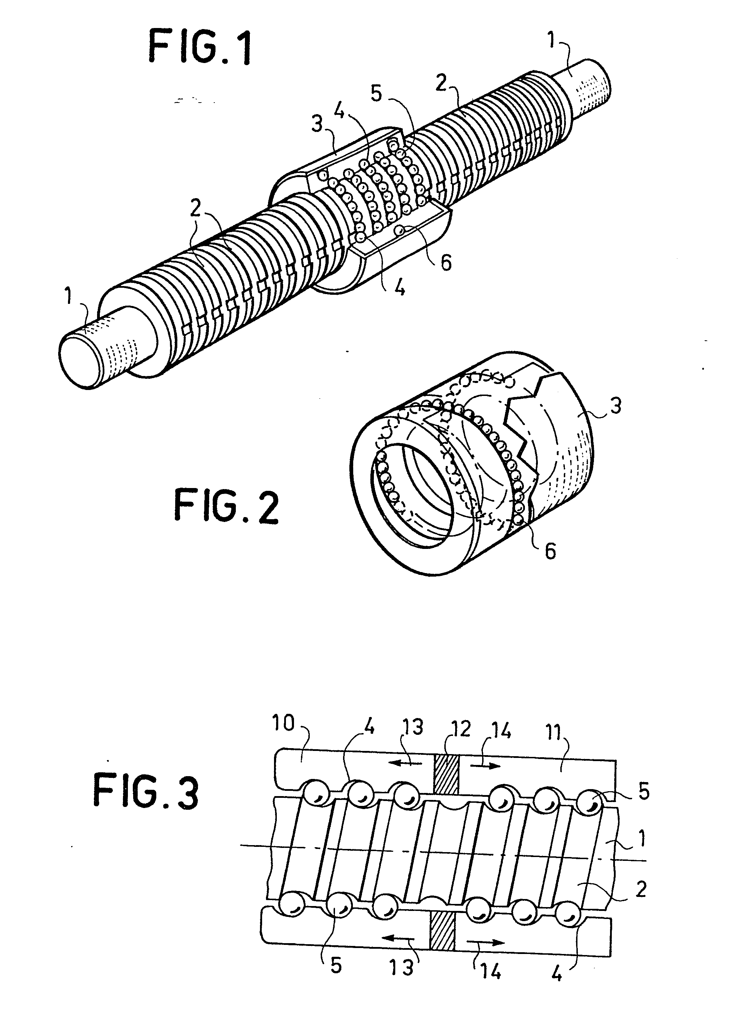

Les figures 1 et 2 illustrent un exemple de vis à billes selon l'art connu. Dans cette technique une vis 1 comporte une gorge hélicoïdale 2 de section semi-circulaire. De façon similaire un écrou 3 comporte à l'intérieur une gorge identique 4 dont le pas est le même que celui de la gorge 2. Une succession de billes 5 est disposée dans l'espace circulaire libre qui sépare la gorge semi-circulaire 2 de la vis 1 de la gorge semi-circulaire 4 de l'écrou 3, la gorge 2 étant placée en regard de la gorge 4. Contrairement au système vis-écrou classique il n'y a pas interpénétration entre la partie filetée et la partie taraudée et en l'absence de billes, l'écrou 3 glisse librement sur la vis 1. Lorsque l'écrou 3 est animé d'un mouvement de rotation autour de la vis 1, chaque bille progresse par roulement dans la gorge ou elle se trouve ; sans précautions particulières, chaque bille s'échapperait du dispositif après avoir parcouru la longueur de l'hélice inscrite dans l'écrou ; pour éviter cet inconvénient chaque bille est prélevée "à la sortie" et réinjectée "à l'entrée de l'écrou" selon la technique dite de recyclage. A cette fin l'écrou 3 comporte, dans l'épaisseur de son enveloppe et comme illustré par la figure 2, un canal hélicoïdal 6 de section circulaire par lequel les billes reviennent au point de départ selon un parcours sans fin. Lorsque la rotation de l'écrou 3 s'inverse la circulation des billes change de sens. Bien que présentant un bon rendement énergétique, ce dispositif présente un jeu trop important pour réaliser des machines de grande précision. Une technique connue permettant de réduire le jeu dans de tels dispositifs consiste à placer les billes sous contrainte ; un exemple de réalisation va être décrit en référence à la figure 3.

La figure 3 illustre un exemple de dispositif à billes précontraintes selon l'art connu. Une vis 1 comporte une gorge hélicoïdale 2 de section semi-circulaire. Deux écrous indépendants 10 et 11, à billes recyclées et conformes à la description précédente, sont séparés par une couronne 12 d'épaisseur déterminée E. Le circuit de recyclage propre à chacun des écrous 10 et 11 n'est pas représenté sur cette figure. L'examen de la figure 3 montre clairement que la couronne 12 provoque un décalage, entre les gorges en regard 4 et 2, dans le sens de la flèche 13 pour l'écrou 10 et dans le sens de la flèche 14 pour l'écrou 11. Pour une valeur limite de l'épaisseur E de la couronne 12 , les billes 5, serrées entre les gorges 4 et 2, n'ont plus de jeu ; les billes de l'écrou 11 suppriment le jeu axial dans le sens de la flèche 14 et les billes de l'écrou 10 le jeu dans le sens de flèche 13, dans les deux cas le jeu radial est aussi supprimé. Le réglage de la valeur E résulte d'un compromis entre un couple d'entraînement trop important et un jeu résiduel trop élevé ; cette épaisseur E de la couronne 12 peut être augmentée périodiquement pour compenser l'usure et le jeu qui en découle. Lorsqu'une bille quitte la vis 1 pour entrer dans le conduit de recyclage 6 elle cesse d'être contrainte et le couple d'entraînement du dispositif diminue

5

inversement lorsqu'une bille quitte le conduit de recyclage pour pénétrer entre les gorges 4 et 2 où elle est soumise à contrainte le couple augmente. L'association d'un tel dispositif à couple variable avec un circuit électronique de commande introduit un phénomène de pompage autour du point d'arrêt. De plus, lors de l'arrêt, cette oscillation amortie est encore aggravée par le jeu résultant à terme de la contrainte des billes.

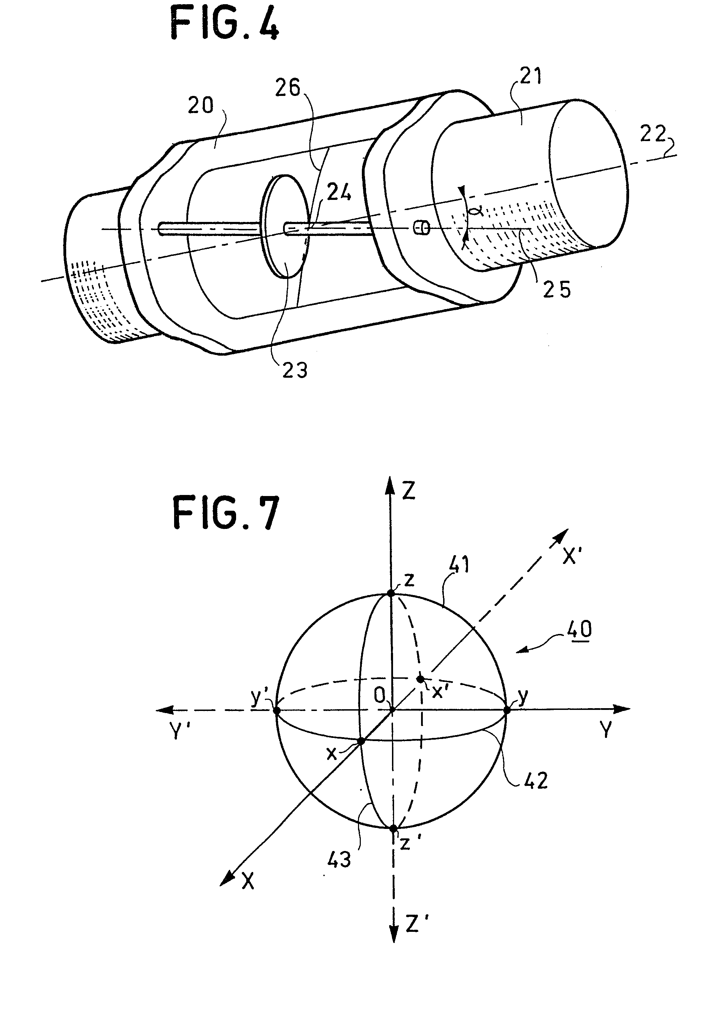

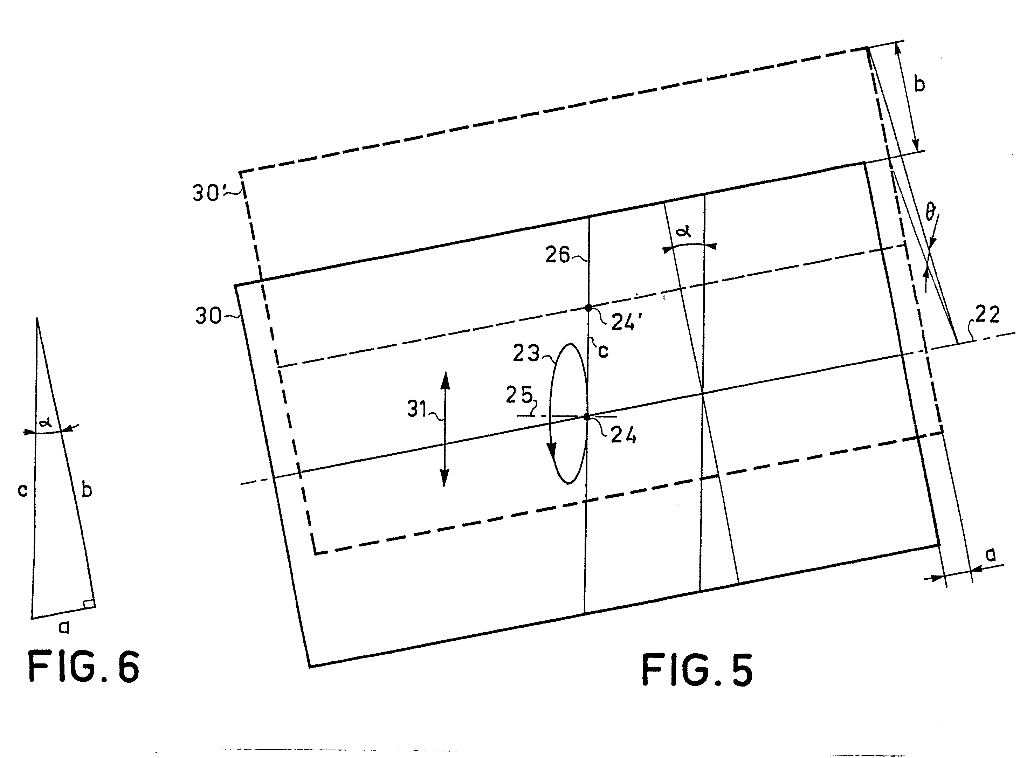

Le dispositif selon l'invention qui va être décrit maintenant élimine l'ensemble de ces inconvénients. Les figures 4, 5 et 6 présentent une forme très simplifiée de l'invention illustrant un premier aspect du fonctionnement. En référence à la figure 4 un corps 20, en forme de bague, est placé sur un arbre lisse 21 d'axe de révolution 22. Une roue 23 en forme de galet est en contact avec l'arbre lisse 21 au point 24. L'axe 25 de la roue 23 et l'axe 22 de l'arbre 21 font entre eux un angle $\alpha$. En l'absence de roue 23 le corps 20 peut glisser librement sur l'arbre 21. L'adhérence au point de contact 24 est telle que la transmission de mouvement entre la roue 23 et l'arbre 21 (et vice versa) s'effectue sans glissement ou frottement. Si l'arbre 21 est animé d'un mouvement de rotation à l'intérieur du corps 20, le lieu des points de contact successifs 24 sur l'arbre 21 est une hélice 26 dont le pas est déterminé par l'angle $\alpha$. Il en résulte un déplacement axial du corps 20 par rapport à l'arbre 21. La figure 5 décrit plus en détail la tranformation du mouvement circulaire en mouvement linéaire et la figure 6 permet d'établir la relation mathématique représentative de cette transformation. Sur la figure 5, le rectangle 30 représente la surface développée de l'arbre 21. La nature du contact au point 24 entre la roue 23 et le rectangle 30 est telle que, l'axe 25 de la roue 23 étant fixe, le rectangle 30 ne peut se déplacer que dans une direction parallèle au plan de la roue 23 indiquée par la flèche 31. Si, le dispositif étant en fonctionnement, le point 24 est amené en 24', le rectangle 30 vient en 30'. Il en résulte un déplacement a du rectangle correspondant à une translation axiale de l'arbre (si le corps 20 est fixe) et un déplacement b correspondant à une rotation angulaire $\theta$ de l'arbre autour de son axe de révolution. La figure 5 met en évidence une relation réciproque entre la rotation angulaire $\theta$ de l'arbre sur son axe et son déplacement axial a à l'intérieur d'un corps fixe 20 de référence. La figure 6 permet d'établir la relation simple qui existe entre le déplacement c sur l'hélice, le déplacement axial a de l'arbre, le déplacement linéaire b d'une génératrice sur l'arbre et l'angle $\alpha$ définissant le pas.

$$a = b \, \text{tg} \, \alpha$$

Si R est le rayon de l'arbre et $\theta$ un angle de rotation de cet arbre autour de son axe de révolution

$$a = \theta \, R \, \text{tg} \, \alpha$$

Cette expression définit la relation entre le mouvement circulaire $\theta$ (exprimé en radians) et le mouvement linéaire a (exprimé en unités de longueur). La présente description suppose dans un but d'explication du fonctionnement un écrou fixe et un arbre axialement mobile. En pratique l'arbre sera généralement axialement fixe et l'écrou mobile, le mouvement relatif restant inchangé.

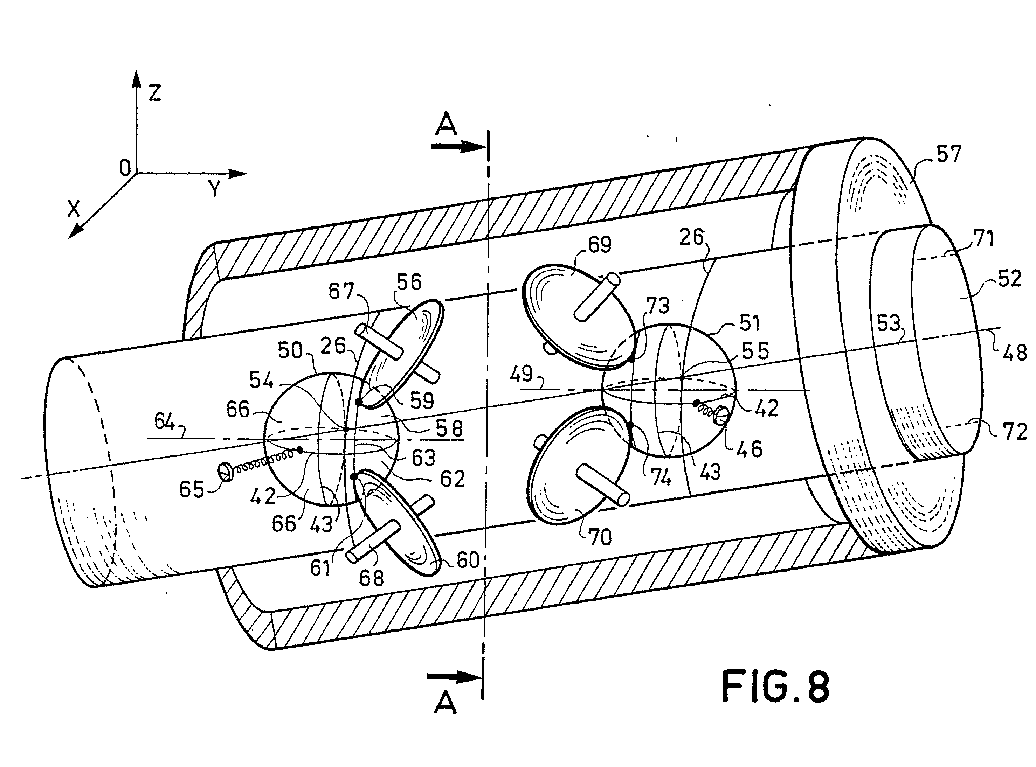

La figure 7 rapporte une bille à un système de coordonnées trirectangulaires dextrorsum et définit des repères nécessaires à la suite de la description. Pour passer progressivement de la forme très simplifiée de la figure 4 à la réalisation réelle d'un dispositif selon l'invention, il y a lieu de remplacer la roue 23 (figure 4) par une bille qui remplit la même fonction en restant en contact avec l'arbre 21 selon un grand cercle et dont l'axe de rotation sera orienté suivant l'axe 25 de la roue 23. Une bille ne possèdant pas d'axe matériel, des moyens de guidage sont prévus pour lui imposer l'axe de rotation choisi. Pour décrire le positionnement de ces moyens des points et des régions sont définis à la surface de la bille à l'aide de la figure 7 ; par ailleurs des notions propres à la géométrie sphérique sont reppelées pour faciliter la compréhension de la description. En référence à la figure 7 une bille 40 est placée au centre d'un système de coordonnées trirectangulaires XYZ de centre O ; les axes OX, OX', OY, OY', OZ et OZ' traversent respectivement la surface de la bille aux points x, x', y, y', z et z'. Un grand cercle a le même rayon et le même centre que la sphère ; de tels cercles sont en nombre infini, les cercles 41, 42, et 43 sont trois exemples de grands cercles particuliers confondus avec les plans du trièdre OXYZ. Un triangle sphérique est, sur une sphère, une surface limitée par trois grands cercles ; le triangle xzy est un exemple de triangle sphérique. Un fuseau est la surface de révolution engendrée par un demi-grand cercle autour de son diamètre, c'est, pour une rotation complète, la surface totale de la sphère ;

à titre d'exemple le fuseau xyx'zx est la surface engendrée par le demi-grand cercle xyx' après une rotation de $\pi/2$ autour de son diamètre xx'.

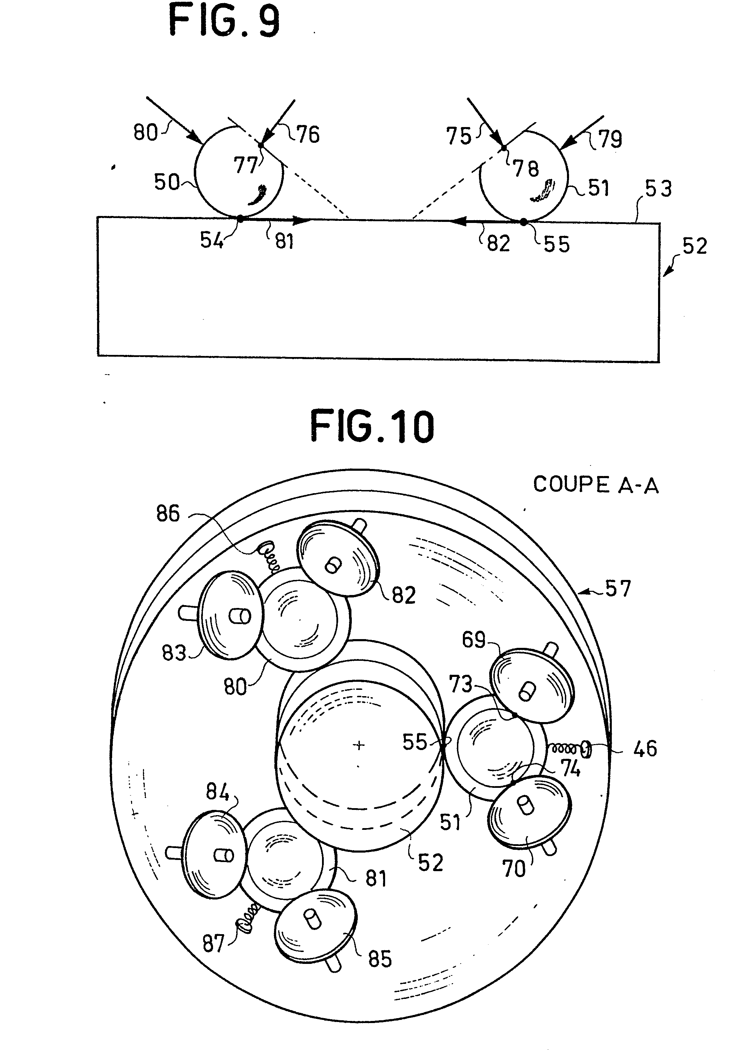

La figure 8 illustre la disposition des éléments dans une vue partielle d'un dispositif selon l'invention. Deux billes 50 et 51 sont en contact avec un arbre 52 en des points 54 et 55 situés sur une génératrice 53. Les points de contact 54 et 55 correspondant au point x' de la figure 7 restent situés à la fois sur l'hélice 26 de l'arbre 52 et sur le grand cercle 43 des billes 50 et 51. Un premier rouleau 56 solidaire d'un corps 57 constituant l'écrou est en contact avec la bille 50 en un point 59 situé à l'intérieur du triangle sphérique 58 correspondant au triangle xyz de la figure 7. Un second rouleau 60 solidaire du corps 57 est en contact avec la bille 50 en un point 61 situé à l'intérieur du triangle sphérique 62 correspondant au triangle xyz' de la figure 7. Dans cette variante préférée les points de contact 59 et 61 restent situés sur un même cercle 63 parallèle au grand cercle 43. Les rouleaux 56 et 60 sont disposés de façon à ce que la bille 50 ne puisse tourner qu'autour d'un axe 64 correspondant à l'axe YY' de la figure 7. Tout mouvement de la bille autour d'un autre axe se traduirait par des frottements aux points de contacts 59 et 61 ; ces possibilités de frottement sont écartées par une force de contact entraînant une résistance au glissement suffisante. Cette force de contact est assurée par un poussoir à bille 65 solidaire du corps 57 et en contact avec la bille 50 à l'intérieur du fuseau 66 correspondant au fuseau z'xzy'z' de la figure 7 ; dans une variante préférée le poussoir 65 sera, de plus, appliqué en un point du cercle 42. La force exercée par le poussoir 65 sur la bille 50 est orientée de façon à appliquer des forces de contact sur les trois points 54, 59 et 61. Les rouleaux 56 et 60 doivent, en outre, remplir les conditions suivantes pour que la bille 50 tourne autour de l'axe choisi 64 : le rayon de la bille 50 passant par le point 59 doit être perpendiculaire à l'axe 67 du rouleau 56, de même le rayon de la bille 50 passant par le point 61 doit être perpendiculaire à l'axe 68 du rouleau 60 ; l'axe 67 du rouleau 56 doit se situer dans un même plan que l'axe 64 de la bille 50, de même l'axe 68 du rouleau 60 doit se situer dans un même plan que l'axe 64 de la bille 50. Lorsque ces conditions sont remplies les contacts aux points 54, 59 et 61 transmettent le mouvement par roulement sans pertes par frottement ; c'est un premier aspect important de l'invention de transformer le mouvement circulaire en mouvement linéaire avec un excellent rendement énergétique. La description qui vient d'être faite des éléments 50, 56, 60 et 65 s'applique respectivement aux éléments 51, 69, 70 et 46, toutefois, conformément à un autre aspect de l'invention qui sera décrit et illustré à l'aide de la figure 9 les positions des rouleaux et du poussoir sont permutées dans le second groupe d'éléments ; les billes 50 et 51 étant liées au système de référence de la figure 7, il en résulte que le rouleau 69 est en contact avec la bille 51 à l'intérieur du triangle sphérique xy'z, le rouleau 70 à l'intérieur du triangle xy'z' et le poussoir 46 à l'intérieur du fuseau z'xzyz'. Enfin deux autres ensembles d'éléments, identiques à ceux disposés sur la génératrice 53, sont placés sur les génératrices 71 et 72 de l'arbre 52 comme le montre la vue en coupe de la figure 10. Bien que dans cette variante préférée les poussoirs 65 et 46 soient "à bille", des poussoirs à galet peuvent être utilisés ; ces poussoirs peuvent encore comporter une simple pointe de contact en matériau à faible coefficient de frottement tel que le téflon ou le delrin

La figure 9 représente une vue simplifiée de l'invention illustrant un second aspect du fonctionnement. Comme indiqué sur la figure précédente, les billes 50 et 51 sont en contact aux points 54 et 55 avec l'arbre 52 sur la génératrice 53. La référence 77 est l'extrémité de la ligne comportant les points de contact 59 et 61 (figure 8) des rouleaux 56 et 60 dont la flèche 76 représente la force de réaction. De même la référence 78 est l'extrémité de la ligne comportant les points de contact 73 et 74 des rouleaux 69 et 70 dont la flèche 75 représente la force de réaction. La force de poussée représentée par la flèche 80 représente l'action du poussoir 65 et la force 79 l'action du poussoir 46. Les éléments sont disposés de telle façon que si l'arbre 52 est soumis, par l'action d'une force extérieure, à un déplacement dans le sens de la flèche 81 la bille 50 exerce un effet de coincement d'autant plus important que la force de déplacement est grande ; pour des raisons de symétrie la bille 51 s'oppose à un déplacement de l'arbre 52 dans le sens de la flèche 82 ; c'est une des caractéristiques essentielles de l'invention de proposer un dispositif vis-écrou sans filet dont la résistance au glissement axial est très élevée.

La figure 10 représente une vue en coupe du dispositif selon l'invention illustré par la figure 8. Afin d'éliminer tout contact par frottement entre l'arbre 52 et le corps 57 et obtenir un auto-centrage de la vis 52 dans l'écrou 57, les éléments décrits en référence à la figure 8 et disposés sur la génératrice 53 sont repétés sur des génératrices 71 et 72, les trois génératrices 53, 71 et 72 étant situées en trois points équidistants. La figure 10 est une vue en coupe selon le plan AA de la figure 8. Dans cette variante préférée de réalisation les trois billes 51, 80 et 81 exercent l'effet de coincement, décrit précédemment, pour un même sens de déplacement axial de l'arbre ; par ailleurs les points de contact des trois billes 51, 80 et 81 avec l'arbre 52 sont, de préférence, placés dans un même plan perpendiculaire à l'axe de révolution et non sur une même hélice. Les éléments 46, 69, 70 - 82, 83, 86 - 84, 85,87 sont solidaires du corps mobile 57 bien que pour des raisons de clarté les liaisons mécaniques n'apparaissent pas sur la figure.

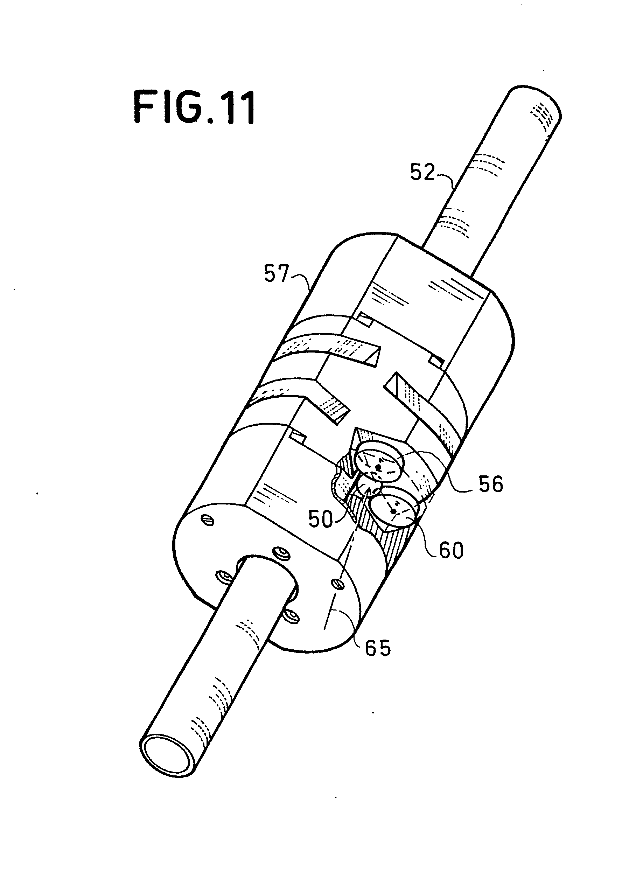

La figure 11 représente une vue en perspective d'un exemple de réalisation pratique selon l'invention. Le corps mobile 57 placé sur l'arbre 52 comporte deux ensembles de trois billes. Chaque bille est guidée par deux roulements à billes et maintenue en place par un poussoir à ressort comportant, en contact avec la bille, une pointe en delrin. Pour des raisons de clarté seule la bille 50 et les roulements associés 56 et 60 ont été représentés sur la figure ; pour les mêmes raisons seuls la position et le sens d'application du poussoir a été représenté par l'axe 65. Les caractéristiques essentielles du dispositif sont les suivantes : longueur de l'arbre 200 mm, diamètre de l'arbre 14 mm, angle du pas 5 degrés, longueur du corps 75 mm, diamètre des billes 6 mm, diamètre des roulements à billes 10 mm.

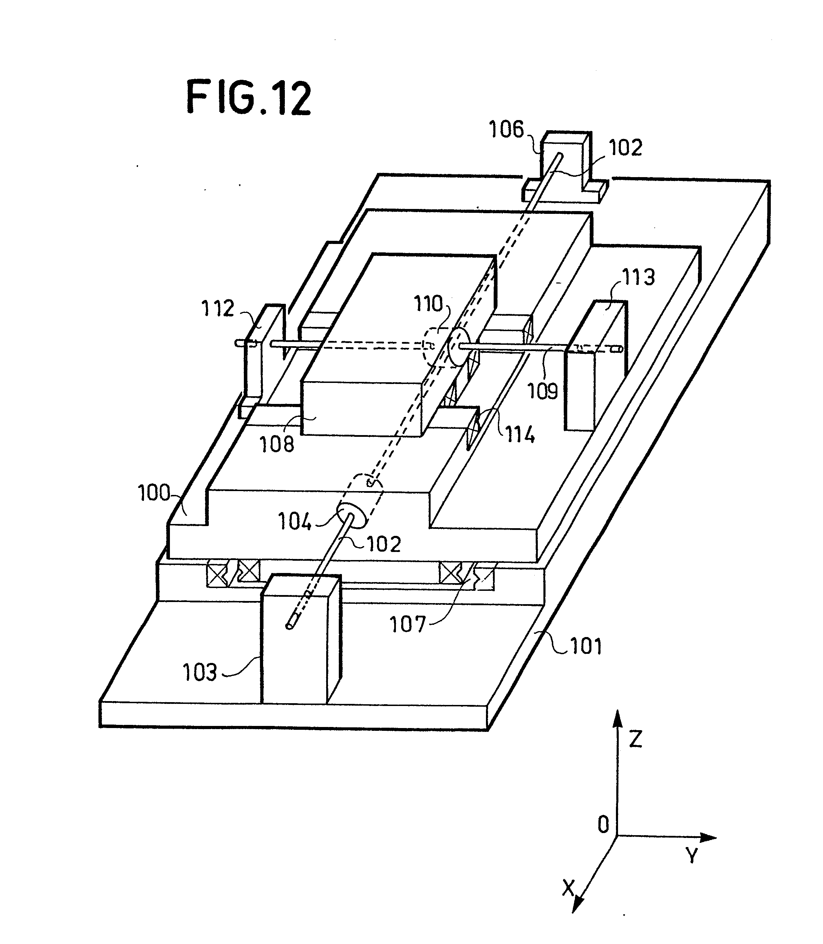

La figure 12 illustre un appareil comportant un support mobile dans un plan mettant en oeuvre deux dispositifs selon l'invention. Un premier corps mobile 100 placé sur un socle fixe 101 peut se déplacer selon la direction OX au moyen d'un arbre lisse 102 solidaire du socle fixe 101 et associé à un écrou 104 solidaire du corps mobile 100. L'arbre 102 est rendu solidaire du socle 101 par un palier 106 et un moteur 103 ; une mise en rotation de l'arbre 102 par le moteur 103 entraîne, selon l'invention, le déplacement du corps mobile 100 guidé par des glissières à billes 107. Un second corps mobile 108 placé sur le corps 100 subit, de ce fait, un déplacement dans la direction OX par rapport au socle 101. Le second corps mobile 108 peut se déplacer selon la direction OY à l'aide d'un second dispositif selon l'invention comportant un arbre lisse 109 solidaire du corps 100 au moyen d'un palier 112 et d'un moteur 113, un écrou 110 solidaire du corps 108 et des glissières à billes 114. En agissant sur la commande des moteurs et sur leur sens de rotation il est possible de déplacer avec précision le corps mobile 108 dans le plan XOY.

L'invention n'est pas limitée à l'exemple de réalisation qui vient d'être décrit. D'autres dispositifs, conformes à l'invention, peuvent être réalisés en agissant séparément ou en combinaisons sur les points suivants :

- La position des billes sur l'arbre peut être différente.

- Un nombre de bille différent peut être utilisé.

- Les billes peuvent avoir des dimensions différentes dans un même dispositif.

- Le sens de coincement peut être affecté aux billes selon toutes les combinaisons.

- Le lieu des points de contact d'un rouleau sur une bille peut différer du lieu de contact de l'autre rouleau sur cette bille.

- Les rouleaux affectés à une bille peuvent être de diamètres différents.

- Les rouleaux utilisés dans un même dispositif peuvent être de diamètres différents.

- Les rouleaux peuvent être remplacés par des roulements à billes.

- Le positionnement des éléments peut ne pas être parfaitement optimalisé et introduire des pertes par frottement aux points de contact entre les organes de liaison.

- La charge radiale de l'arbre peut être augmentée au moyen de paliers intermédiaires.

Le dispositif de transformation d'un mouvement circulaire en mouvement linéaire selon l'invention présente les avantages suivants :

- Le couple d'entraînement de l'arbre est constant.

- Le dispositif ne présente pas de jeu et l'usure est compensée automatiquement par des poussoirs.

- Le positionnement du corps mobile est précis.

- La résistance au glissement axial du corps mobile sur l'arbre est très élevée.

11

- La valeur du pas peut être très faible.

- A une vitesse angulaire constante de l'arbre correspond une vitesse linéaire constante du corps mobile.

- La transmission du mouvement se fait sans frottements et le rendement énergétique est élevé.

- Les éléments constitutifs du dispositif ont une précision et des tolérances standards.

- La fonction de transfert établie en référence à la figure 5 ne contient que l'angle du pas, le rayon de l'arbre et son déplacement angulaire ; il en résulte que les paramètres de tous les autres éléments n'affectent pas les performances du dispositif.

- L'absence de frottement, la compensation automatique d'une usure par ailleurs très faible garantissent une longue durée de vie et rendent la maintenance très limitée.

12

## REVENDICATIONS

1. Dispositif de transformation d'un mouvement circulaire en un mouvement linéaire comprenant un arbre cylindrique lisse (52) solidaire d'un bâti et pouvant être animé d'un mouvement de rotation autour de son axe de révolution (48), un corps mobile (57) devant se déplacer selon un mouvement linéaire parallèle à l'axe (48) de l'arbre cylindrique (52), des organes de liaison disposés entre l'arbre cylindrique (52) et le corps mobile (57) caractérisé en ce que les organes de liaison comprennent des premiers moyens de liaison en contact avec l'arbre (52) constitués d'au moins une première et seconde billes (50,51), des seconds moyens de liaison solidaires du corps mobile (57) et placés en contact avec les premiers moyens de liaison constitués de rouleaux (56,60,69,70), des troisièmes moyens de liaison solidaires du corps mobile (57) et placé en contact avec les premiers moyens de liaison constitués de poussoirs (65,46) ; et en ce que chacune des billes (50 et 51) ayant son centre confondu avec le centre d'un système de coordonnées rectangulaires dextrorsum défini par les axes XX', YY', ZZ' interceptant respectivement la surface de la bille aux points x, x', y, y', z, z', les moyens de liaison vérifient simultanément les conditions suivantes : l'axe de rotation des billes (64, 49) est confondu avec l'axe de référence YY' et cet axe est situé dans un plan parallèle à l'axe (48) de l'arbre cylindrique, l'axe de rotation des billes (64,49) et l'axe de révolution (48) de l'arbre cylindrique (52) font entre eux un angle déterminé α , le point de contact (54,55) entre chaque bille (50,51) et l'arbre (52) est situé en x', ladite première bille (50) est en contact avec un premier rouleau (56) en un point (59) situé à l'intérieur du triangle sphérique xyz, avec un second rouleau (60) en un point (61) à l'intérieur du triangle xyz' et avec un premier poussoir (65) à l'intérieur du fuseau zxz'y'z ; ladite seconde bille (51) est en contact avec un troisième rouleau (69) en un point (73) situé à l'intérieur du triangle sphérique xy'z, avec un quatrième rouleau (70) en un point (74) situé à l'intérieur du triangle xy'z' et avec un second poussoir (46) à l'intérieur du fuseau zxz'yz ; l'axe de révolution de chaque rouleau est à la fois perpendiculaire au rayon de la bille passant par le point de contact entre ledit rouleau et ladite bille et situé dans un plan contenant l'axe de rotation YY'.

2. Dispositif selon la revendication 1 caractérisé en ce qu'un premier ensemble constitué de plusieurs desdites premières billes (50) et des moyens de liaison associés (56,60,65) est placé autour de l'arbre dans un plan perpendiculaire à son axe de révolution (48) et un second ensemble constitué de plusieurs desdites secondes billes (51) et des moyens de liaison associé (69,70,46) est placé autour de l'arbre dans un autre plan distant du premier et parallèle à celui-ci.

3. Dispositif selon la revendication 2 caractérisé en ce que les premier et second ensembles comprennent chacun trois billes réparties autour de l'arbre (52) en trois points équidistants.

4. Dispositif selon l'une quelconque des revendications 1 à 3 caractérisé en ce que les rouleaux constituant les seconds moyens de liaison sont des roulements à billes.

5. Dispositif selon l'une quelconque des revendications 1 à 4 caractérisé en ce que les troisièmes moyens de liaison sont constitués de poussoirs à bille (65,46).

6. Dispositif selon l'une quelconque des revendications 1 à 4 caractérisé en ce que les troisièmes moyens de liaison sont constitués de poussoirs à galet.

7. Dispositif selon l'une quelconque des revendications 1 à 4 caractérisé en ce que les troisièmes moyens de liaisons sont des poussoirs dont l'extrêmité en contact avec la bille est en matériau à faible coefficient de frottement.

8. Dispositif selon la revendication 7 caractérisé en ce que le matériau à faible coefficient de frottement est du téflon.

9. Dispositif selon la revendication 7 caractérisé en ce que le matériau à faible coefficient de frottement est du delrin.

10. Support mobile (108) dans un plan pour la réalisation de circuits intégrés comportant une platine porte-substrat sur lequel lesdits circuits intégrés doivent être réalisés caractérisé en ce qu'il met en oeuvre deux dispositifs (102-104, 109-110) selon l'une quelconque des revendications 1 à 9 de manière à mouvoir ladite platine suivant deux axes de coordonnées orthogonaux parallèles au plan.

0102855

1/7

FIG.1

FIG.2

FIG.3

# FIG.4

# FIG.7

FIG.5

FIG.6

FIG.8

0102855

# FIG.9

# FIG.10

COUPE A-A

FIG.11

# FIG.12